# EUROPEAN PATENT APPLICATION

(11) **EP 3 885 815 A1**
(43) Date of publication of application: **29.09.2021**
(21) Application number: 20166008.1
(22) Date of filing: 26.03.2020
(51) Int. Cl.: G02B 21/36, G01N 35/00

(54) **DEVICE FOR GENERATING AN IMAGE OF BIOLOGICAL SAMPLE ON A GLASS SLIDE FOR GENERATING AN INVENTORY IN AN IMAGE DATABASE**

(71) Applicant: Medizinische Universität Graz, 8036 Graz (AT)
(72) Inventor: Plass, Markus, 8010 Graz (AT); Russ, Ingo, 8020 Graz (AT); Wagenthaler, Lisa-Marie, 8010 Graz (AT); Reihs, Robert, 8046 Stattegg (AT)
(74) Representative: Maiwald Patent- und Rechtsanwaltsgesellschaft mbH

(57) **Abstract**

The invention concerns a device and a method for generating an image of a biological sample on a glass slide for generating an inventory in an image database. The device comprises a receiving unit configured for receiving the biological sample on the glass slide, a camera configured for generating an image of the biological sample while being received by the receiving unit, a releasing unit configured for automatically releasing the glass slide from the receiving unit after generating the image by the camera. The camera is configured to generate the image such that the image of the biological sample on the glass slide comprises an overall image of the glass slide and the biological sample on the glass slide, wherein the releasing unit is configured for applying a mechanical force onto the glass slide received by the receiving unit for releasing the glass slide from the receiving unit.

## Description

### FIELD OF THE INVENTION

The invention relates to the field of image generating of biological samples, in particular of biological samples on a glass slide, wherein the images are generated for generating an inventory in an image database.

### BACKGROUND OF THE INVENTION

For performing a diagnosis on the basis of a sample on a glass slide, the sample, i.e. the biological sample, is nowadays typically marked with a patient number and type of the sample by hand and if appropriate also provided with markers for indicating an interesting region of the sample. These handwritten markings have the drawback that they are not machine-readable.

For digitalizing objects on glass slides mostly whole slide image scanners are used, so called WSI-scanner. For this digitalization, the purity of the glass slide is a crucial factor and the glass slides need an unambiguous machine-readable code, for example, a QR-Code or a barcode, but the original (handwritten) code or number may disappear below the new machine-readable code. Further, the handwritten markings, which should remain for documentation and possible follow-up diagnosis, disturb or harm the digitalization process, because biological sample can get indistinct below. The sample being analyzed with the slide image scanner has to be cleaned before the slide image scanner can start to analyze it. This cleaning also includes the removement of the marker indicating a relevant region on the sample for a specific diagnosis. During the removal of the markers for the digitalization and/or the cleaning of the sample, the sample may be destroyed. Further, due to the elaborate sample preparation process a sample quality control has to be conducted by hand before the sample is prepared to be used by the slide image scanner of the prior art. The currently used slide image scanner are expensive in purchasing and further has a low throughput of glass slides, such that it is not possible to easily and cheaply catalogue or inventory biological samples.

### SUMMARY OF THE INVENTION

Therefore, there exists a need for a device, which allows for a simple, cheap and easy digitalization of a biological sample on a glass slide such that an overview of the whole sample on the glass slide including all markers and relevant handwritten patient codes can be provided, wherein the image is usable for generating an inventory in an image database. Further, there exists a need that failures during the creation of the machine-readable codes are prevented and that the original codes have to remain and must not disappear under the machine-readable code.

The object of the present invention is solved with the subject matter of the independent claims, wherein further embodiments are incorporated in the dependent claims. An object of the invention is to provide a device which is able to create a fast and easy to use overview image of the whole biological sample on a glass slide including markers and codes on the sample (and on the glass slide). Thereby, an inventory in an image database has access to the image of original non-processed, not changed, biological samples on the glass slide. This will be explained in more detail hereinafter.

According to a first aspect of the invention, a device for generating an image of a biological sample on a glass slide for generating an inventory in an image database comprises a receiving unit which is configured for receiving the biological sample on the glass slide and a camera configured for generating an image of the biological sample while being received by the receiving unit. The device further comprises a releasing unit configured for automatically releasing the glass slide from the receiving unit after generating the image by the camera, wherein the camera is configured to generate the image such that the image of the biological sample on the glass slide comprises an overall image of the glass slide and the biological sample on the glass slide. Further, the releasing unit is configured for applying a mechanical force onto the glass slide received by the receiving unit for releasing the glass slide from the receiving unit.

In particular, the device is configured for generating an image of a biological sample on a glass slide for inventorizing an image of a biological sample in an image database. The device is able to automatically release the glass slide after the generation of the image, this leads to a fast throughput of glass slides and enhances the workflow for digitalization and for creating an inventory of the images of biological samples. The generated image can be used for digitalization of the biological sample and an inventory for an image database can be build up after generating a plurality of images.

In the context of the present invention, the term "inventory" shall be understood to describe a collection and/ or a library of images of biological samples, in particular digitalized images of samples on a glass slide. The inventory is further generated for providing an archive of biological samples. Further, with the inventory of the images an archive back up relating to the patients and/or to specific diagnosis or pathological findings can be provided.

In the context of the present invention, the term "automatically" shall be understood to describe that the releasing of the glass slide from the receiving unit after the generating of the image by the camera can be carried out without interaction of a user. The device itself automatically releases the glass slide. For example in other available scanners of the prior art, the glass slide has to be removed manually by the user.

In the context of the present invention, the term "overall image" shall be understood to describe an entire image of the biological sample on the glass slide, wherein the image can comprises a picture of the entire size of the glass slide and not only the area on which the biological sample is positioned on the glass slide. Hence, the overall image comprises the biological sample and additional the markers indicating a region being relevant for diagnosis and additional codes and/or numbers of the patient for identifying the patient, the tissue from which the sample has been taken, and/or the organ from which the sample has been taken, or other clinical relevant codes. On the other hand, the overall image shall be understood to describe an entire image of the biological sample excluding non-relevant parts of the glass slide. In particular, the overall image comprises the biological sample and these parts of the glass slides onto which the additional markers are provided, wherein parts of the glass slide which do not comprise any information relating to the biological sample are not comprised in the overall image.

The receiving unit is further configured for holding the glass slide when received by the receiving unit. The camera may be arranged above the receiving unit and also above the releasing unit such that the camera may generate an image of the biological sample on the glass slide from above. A conventional camera may be used for generating the image of the sample. When using a conventional camera the use of expensive optical microscope, digital microscope, may be avoided. It may also be possible to use more than one camera for generating the image of the sample, wherein one or more cameras are generating the same overall image or each camera is generating an image of different parts of the sample and the glass slide, which plurality of images may afterwards be processed to one overview image.

The releasing unit applies a mechanical force onto the glass slide for releasing the glass slide from the receiving unit, in particular for releasing the glass slide from the device itself. The mechanical force may be applied onto at least one side of the glass slide, wherein the at least one side of the glass slide may be a side surface of the glass slide on which no sample is attached. The mechanical force may directly interact at the glass slide. Further, the mechanical force may be a pushing force and/or pulling force directly interacting on the glass slide for moving the glass slide out of the device.

Further, the releasing unit may be configured and arranged in such a manner that it forms part of the receiving unit. Hence, the receiving and the releasing unit may be embodied in one spatial unit, wherein different elements of said spatial unit are configured and arranged for the receiving function and the releasing function, as was described herein before.

According to an exemplary embodiment of the invention, the releasing unit comprises a release element and a piston configured for releasing the glass slide, when the mechanical force is applied, wherein the mechanical force is generated by the piston for moving the release element.

The piston is configured and arranged to move the release element, wherein the release element may only be moved when the piston will be moved. In particular, the piston is automatically moved using a pushing force for pushing the release element towards the glass slide, such that the glass slide may be moved out of the releasing unit and out of the device.

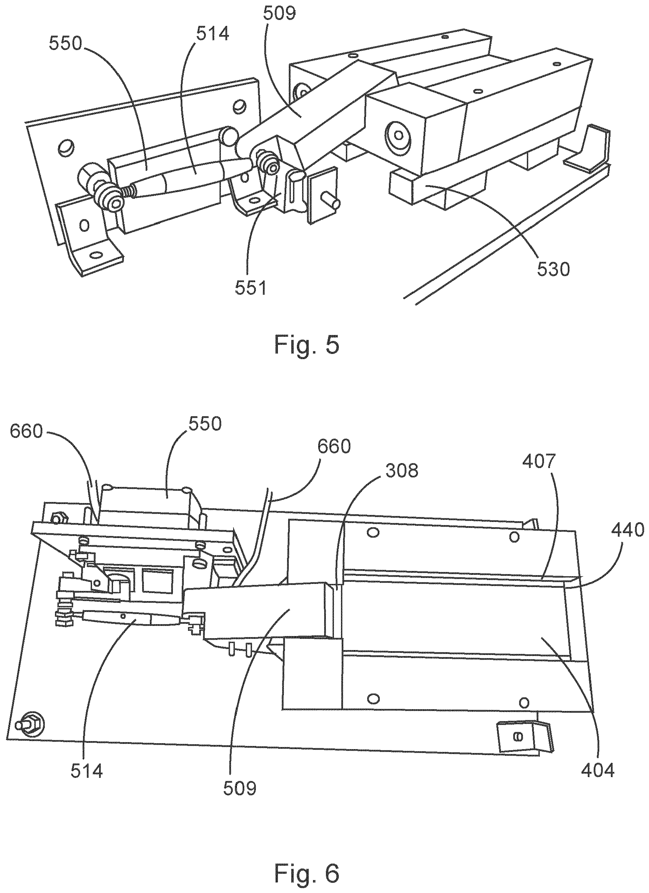

An exemplary embodiment of such a release element and piston can be seen Figure 5 and Figure 6. For instance, the piston may be movable from a rest position into a release position by the mechanical force, wherein the release position is a position in which the piston causes the release element to move the glass slide out of the releasing unit. In particular, in the release position the release element is in contact with the glass slide, wherein the contact is established by the movement of the piston into the release position. On the other side, the rest position is a position of the piston wherein the piston does not cause the release element to move the glass slide. In particular, the rest position may be a position wherein the release element is not in contact with the glass slide. For instance, the piston is moving the release element away from the glass slide and the piston is positioned in the rest position. Hence, when a new glass slide has to be inserted into the receiving unit, the piston has to be moved into the rest position different to the release position. In particular, before the insertion of a new glass slide the piston is moved by a pulling force into the rest position. By moving the piston back into the rest position, the piston, in particular the release element will not disturb the receipt of the glass slide. The glass slide is moved by the release element and the piston in a predetermined direction and further along a predetermined direction. The predetermined direction may be any direction, which leads the glass slide out of the releasing unit, in particular out of the device. The configuration of the release element and the piston realizes an easy constructive way for an automatical release mechanism.

The release element may be a simple mechanical component, having a cuboid or cylindrical shape, wherein one end of the release element is attached at the piston and the opposite end may form a contact with the glass slide for moving the glass slide. The release element may be in direct contact with at least one side of the glass slide when moving the glass slide out of the releasing unit.

According to an exemplary embodiment of the invention, the piston is a turnbuckle configured for adjusting the position of the release element.

The turnbuckle may be used to adjust the tension and/or the length of the distance between the turnbuckle and the release element, in particular for increasing or decreasing the distance between the release element and the turnbuckle. Insofar, the release element can be positioned closer or further away from the glass slide to be moved by the release element, this may also serve for adjusting the strength of the mechanical force, which will be applied to the glass slide by the release element. Further, by adjusting the distance between the glass slide and the release element by the turnbuckle, glass slides with different lengths can be inserted into the releasing unit. Therefore, the device may be used for glass slides having different lengths. The elements of this embodiment can be seen from the very detailed embodiment shown in Figure 5 and Figure 6.

According to an exemplary embodiment of the invention, the device further comprises a receiving opening configured for receiving the glass slide in the receiving unit, and a support unit for holding the glass slide in a predefined position in the receiving unit for generating the image by the camera.

For example, the receive opening is an opening in a housing of the device, i.e. an opening in a wall of the device through which the glass slide has to be inserted into the device, in particular into the receiving unit. Further, the receiving opening may be an opening in the receiving unit, wherein the receiving unit is configured and formed in such a manner that one glass slide fits through the opening. Moreover, the receiving opening is formed such that a size of the receiving opening corresponds to a size of the glass slide. When the glass slide is received through the receiving opening in the receiving unit the glass slide will afterwards rest on the support unit in the receiving unit. In other words, the support unit is arranged in the receiving unit, forming a base onto which the glass slide may be stored or held for generating the image of the biological sample. The support unit may be a simple plate or table onto which the glass slide may be laid after insertion into the device. For instance, the support unit may be configured and formed in such a manner that the surface onto which the glass slide rests on the support unit may be minimal. For this reason, an illuminating area of a light source used for image generation may be maximal, wherein the light source and the image generation will subsequently be elucidated in detail. The tolerances of the support unit may be chosen such that also non-processed glass slides, which may have an inclined cover slip, may be inserted into the receiving unit. Further, the support unit may be configured and formed in such a manner that the glass slide is supported by the support unit along its entire length.

According to an exemplary embodiment of the invention, the release element is configured for moving the glass slide out of the device along the support unit.

In particular, the support unit may be arranged below the glass slide, such that the glass slide is inserted into the receiving unit laying above the support unit, wherein the support unit may be formed along the entire length below the glass slide. Hence, the release element may move and/or push the glass slide out of the receiving unit along the entire support unit, such that the support unit serves as a support below the glass slide during the whole releasing movement of the glass slide.

According to an exemplary embodiment of the invention, the device further comprises a plate configured for guiding the release element towards the glass slide when releasing the glass slide, wherein a release opening formed in the plate is surrounded by the plate on three sides, wherein the glass slide is released by the release element through the release opening.

For instance, the plate may be arranged above the release element, such that the plate may form a barrier or a support above the release element, which causes the release element not to incline into a direction above the glass slide. The glass slide may be inserted from above through the plate, in particular through the release opening, wherein the release opening may have a size corresponding to the glass slide. The glass slide may rest on the support unit below the plate, or also in the plate, wherein the plate may form walls surrounding the glass slide on at least three sides and the support unit may form the bottom onto which the glass slide rests during the image generation. The releasing opening may be formed on a fourth wall, wherein the opening is formed in the entire fourth wall, such that the glass slide is not covered by the fourth wall for being removable through the fourth wall, i.e. the release opening.

According to an exemplary embodiment of the invention, the device further comprises a motor for moving the piston. Preferably, the motor is an electromotor, in particular a servomotor, or a step motor. The motor is attached to the piston in such manner that the motor moves the piston forward and backward. In particular, the piston is moved by the motor towards the release element. Further, the motor moves the piston from the rest position into the release position and backwards into the rest position. The motor may be electrically coupled to a power supply that may be part of the device of the present invention. Furthermore, the motor may be electrically coupled to a control unit configured for controlling the motor, and hence the removing of the glass slide. Moreover, the control unit may also control the camera of generating the image of the sample.

According to an exemplary embodiment of the invention, the device further comprises at least a first light source for illuminating the glass slide, and a second light source for illuminating the glass slide, wherein the first light source is arranged and configured to illuminate a first main surface of the received glass slide, wherein the second light source is arranged and configured to illuminate a second main surface of the received glass slide.

A main surface of the glass slide may be a surface on which the biological sample is attached to the glass slide; this means on the main surface on which the biological sample is visible. The first main surface may lay opposite to the second main surface of the glass slide. In other words, both light sources are illuminating the glass slide from different opposing sides, wherein the glass slide is illuminated by the first light source from above and illuminated by the second light source from below. The illumination at two sides of the glass slide may ensure that for instance by illuminating the first main surface a detailed image of the biological sample may be generated and by illuminating the second main surface a detailed image of the markers and codes on the glass slide for the biological sample may be generated, or vice versa. It may of course also be possible to use more than one light source for illuminating one surface of the glass slide. For instance, different spectral light sources may be used for illuminating the glass slide from one side and/or from both sides.

According to an exemplary embodiment of the invention, the first light source and/or the second light source is an LED. Further, the light sources may be an OLED or an LED-Panel. For instance, the glass slide is illuminated from above and from below by one LED covering the spectrum of visible light. Other light emitting sources may also be possible for being used in the device, wherein when using more than one light source different light sources for different light spectrums may be used.

According to an exemplary embodiment of the invention, the camera is configured for generating a first image from the glass slide when illuminated by the first light source and a second image from the glass slide when illuminated by the second light source.

According to this embodiment of the invention, the camera generates the first image from above, wherein the first main surface of the glass slide is illuminated. Further, the camera generates the second image from above the glass slide, wherein the second main surface of the glass slide is illuminated. In other words, the camera generates the first and the second image from above the glass slide, wherein at least the illumination of the glass slide is changed. The device generates two images from two illuminated main surfaces of the glass slide for ensuring that in the overall image all information of the sample on the glass slide will be included. During the image generation of one main surface typically only the respective light source is switched on, the other light source, which would illuminate the main surface from which no image presently is generated, would be switched off.

On the other hand, the camera may be configured to generate an image of the first main surface when the first light source is switched on, and may be further configured to generate an image of the second main surface when the second light source is switched on. According to this embodiment of the invention, the camera is arranged and configured to generate an image of each main surface of the glass slide. This means that the camera, in particular the image generating position of the camera, may be switchable between different positions for being able to generate an image of different surfaces of the glass slide.

Furthermore, more than one camera may be used for generating the image of the glass slide, wherein a first camera may be configured and arranged for generating an image of the first main surface of the glass slide and a second camera may be configured and arranged for generating an image of the second main surface of the glass slide. This may avoid the need to switch camera positions.

According to an exemplary embodiment of the invention, wherein the device further comprises an image processing unit configured for generating a combined image comprising the first image and the second image. In particular, the image-processing unit is configured for joining the first image and the second image together to one single image, one joint image. The combined image will comprise all information, which can be seen on the biological sample and on the glass slide. For instance, the generated first image may include the markers and the codes on the glass slide and the generated second image includes a whole view of the sample, or vice versa. Hence, the combined image comprises all information of both images describing the front- and the backside of the main plain of the glass slide. Therefore, also information other than relating to the biological sample itself may be comprised in the image.

According to an exemplary embodiment of the invention, the device is configured to control the at least two light sources by a pulse width modulation.

In particular, at least two LEDs are controllable by pulse width modulation. For instance, a pulse width modulation module is used for generating pulse width modulation, wherein the light sources are in electrically contact with the pulse width modulation module for being controlled by the pulse width modulation module. The pulse width modulation may be used for controlling the order in which the light sources should be switched on and off for the image generation. In particular, the pulse width modulation may control whether the glass slide is illuminated from above or below. Moreover, the pulse width modulation may be used to control the intensity, brightness, of the light source. Furthermore, the pulse width modulation may be configured to control the releasing unit, in particular to control the release element and the piston, wherein the pulse width modulation may control the motor, which moves the piston of the releasing unit. For controlling the motor, the pulse width modulation module may be in electrically contact with the motor.

According to an exemplary embodiment of the invention, the device further comprises a storage unit for storing the generated image in the device. Further, the storage unit may be used for storing the generated image in the image database and/or for storing the generated image for further processing. The further processing may use a diagnosis tool, or displaying for diagnosis on a display, a documentation of the images, and/or a quality control of the sample (for instance, whether the sample is air bubble free or not).

According to an exemplary embodiment of the invention, the camera creates the image with a resolution in a range of three-times to seven-times resolution, preferably a five-times resolution.

The device uses a lower resolution than the conventional slide image scanner, this has the advantage that a lower data capacity/volume may be needed for storing the image and in particular for processing the image. The lower resolution of the image is sufficient for generating an inventory of an image database, wherein a higher resolution is compulsory for an image generation by current WSI scanners

According to a second aspect of the invention, a method for generating an image of a biological sample on a glass slide and for generating an inventory in an image database comprises the steps of receiving the biological sample on the glass slide by a receiving unit of a device, generating an image of the biological sample on the glass slide by a camera of the device, while being received by the receiving unit, automatically releasing the glass slide by a releasing unit of the device after the generating of the image by the camera. The generation of the image of the biological sample on the glass slide comprises an overall image of the glass slide and the biological sample on the glass slide, wherein the releasing comprises applying a mechanical force onto the glass slide received by the receiving unit for releasing the glass slide from the receiving unit. In particular, the glass slide may firstly be received by the receiving unit and may be held by the receiving unit for image generation. Secondly, the camera generates the overall image and thirdly the glass slide may be removed from the receiving unit, and/or from the device automatically by the releasing unit.

According to an exemplary embodiment of the invention, the method further comprises the steps of illuminating a first main surface of the received glass slide by a first light source of the device, and illuminating a second main surface of the received glass slide by a second light source of the device. In particular, the light sources may be arranged and configured for illuminating the respective main surface, wherein they may not be able to illuminate the other main surface.

According to an exemplary embodiment of the invention, the method further comprises the steps of generating a first image of the glass slide when illuminated by the first light source, and generating a second image of the glass slide when illuminated by the second light source. In particular, the image is generated by the camera of the device from above the glass slide such that only the illumination direction changes and the image generation is conducted from the same side of the glass slide. On the other hand, it may also be possible to generate a first image of the first main surface illuminated by the first light source and generating a second image of the second main surface illuminated by the second light source. Hence, the image is generated from the respective illuminated glass slide and not only from one side of the glass slide.

According to an exemplary embodiment of the invention, the method further comprises the step of generating a combined image comprising the first image and the second image.

According to an exemplary embodiment of the invention, the method further comprises the step of using the generated image for generating the inventory of the image database.

Further, the device for generating an image of the biological sample on a glass slide may be configured to use the generated image for generating the inventory of the image database. The use of the generated image may be understood as separately using the generated first image and the generated second image for generating the inventory. On the other hand the use of the generated image may be understood as using the combined image, which comprises the first and the second image, for generating the inventory. In particular a plurality of images are generated by the device (and the method respectively) wherein the inventory is generated by using the plurality of generated images. The plurality of images may be the first generated image, the second generated image and/or the combined image. The images are used for being transferred into the image database and/or the images are stored in the image database, wherein as explained hereinbefore the device may comprise a storage which may be used as the image database. In particular, the use of the generated image may comprise the digitalization of the generated images, wherein each generated images may be automatically digitalized after the generation of the image by the camera. Afterwards, the digitalized image may be automatically stored in the inventory. The inventory may be used for automatically performing a diagnosis on the basis of the images stored in the inventory, wherein different images of the inventory may be compared with each other for diagnosis comparison.

### BRIEF DESCRIPTION OF THE DRAWINGS

The aspects defined above and further aspects of the present invention are apparent from the examples of embodiment to be described hereinafter and are explained with reference to the examples of embodiments. The invention will be described in more detail hereinafter with reference to examples of embodiments, but to which the invention is not limited.
Fig. 1 illustrates a device according to an exemplary embodiment of the invention.
Fig. 2 illustrates a sidewall of the device according to an exemplary embodiment of the invention.
Fig. 3 illustrates a releasing unit used in an exemplary embodiment of the invention.
Fig. 4 illustrates a releasing unit used in an exemplary embodiment of the invention.
Fig. 5 illustrates a side view of a releasing unit used in an exemplary embodiment of the invention.
Fig. 6 illustrates a top view of a releasing unit used in an exemplary embodiment of the invention.
Fig. 7 illustrates a schematic block diagram of a method according to an exemplary embodiment of the invention.

### DETAILED DESCRIPTION OF EMBODIMENTS

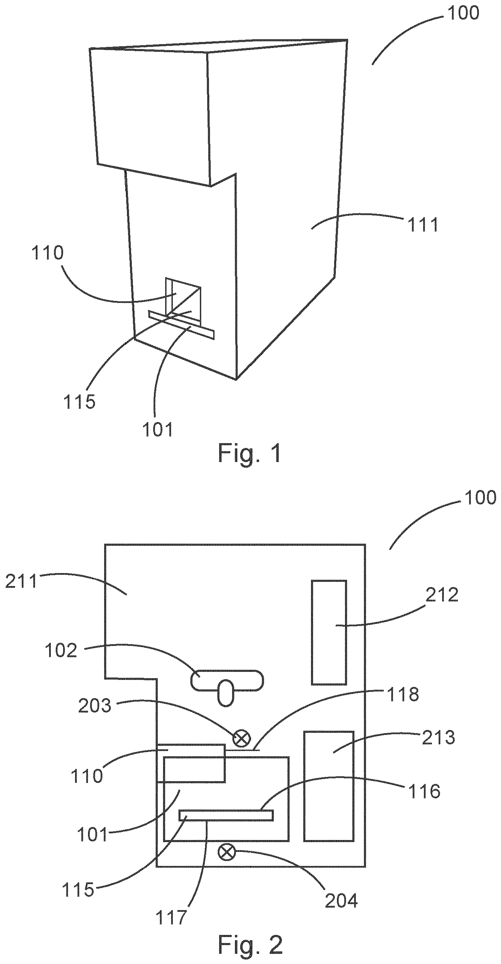

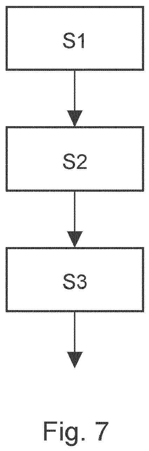

Figure 1 and Figure 2 illustrate a device (100) for generating an image of a biological sample on a glass slide (115) for generating an inventory in an image database. The device (100) comprises a receiving unit (110) configured for receiving the biological sample on the glass slide (115), a camera (102) configured for generating an image of the biological sample while being received by the receiving unit (110), a releasing unit (101) configured for automatically releasing the glass slide (115) from the receiving unit (110) after generating the image by the camera (102). The camera (102) is configured to generate the image such that the image of the biological sample on the glass slide (115) comprises an overall image of the glass slide (115) and the biological sample on the glass slide (115), wherein the releasing unit (101) is configured for applying a mechanical force onto the glass slide (115) received by the receiving unit (110) for releasing the glass slide (115) from the receiving unit (110). The device (100) comprises a housing, which in Figure 1 and 2 is indicated with a sidewall (111, 211). Inside the housing the receiving unit (110), the releasing unit (101) and the camera (102) are arranged. As can be seen in Figure 1 the device (100) comprises a receiving opening for the receiving unit (110), wherein the receiving opening is configured for receiving the glass slide (115) in the receiving unit (110), wherein in this embodiment the receiving opening is arranged at the housing of the device (100). The device (100) may be able to perform the method for generating an image of a biological sample on a glass slide (115) and for generating an inventory in an image database. The method may comprise the steps of receiving the biological sample on the glass slide (115) by the receiving unit (110) of the device (100). The method and the respective step will be explained in detail with Figure 7.

As schematically illustrated in Figure 2, the device (100) further comprises at least a first light source (203) for illuminating the glass slide (115) and a second light source (204) for illuminating the glass slide (115). The first light source (203) is arranged and configured to illuminate the first main surface (116) of the received glass slide (115), wherein the second light source (204) is arranged and configured to illuminate the second main surface (117) of the received glass slide (115). In particular, the first light source (203) is arranged above the glass slide (115) and the second light source (204) is arranged below the glass slide (115). The first light source (203) and/or the second light source (204) is an LED. The device may further comprise a scattering unit (118) for reducing the reflection of the light source. The scattering unit (118) may be arranged between the first light source (203) and the glass slide (115). The scattering unit may also be arranged between the second light source (204) and the glass slide (115). It may also be possible to use two scattering units on each side of the glass slide (115), such that reflections of the light source on both sides of the glass slide (115) may be reduced. The scattering unit may be arranged in each embodiment of the present invention. The camera (102) is configured for generating a first image from the glass slide (115) when illuminated by the first light source (203) and a second image from the glass slide (115) when illuminated by the second light source (204). In particular, the camera (102) generates an image of the glass slide (115) from above, which means from the first main surface (116) when illuminated by the first light source (203). Further, the camera (102) generates an image of the glass slide (115) from above, from the first main surface (116) when illuminating the second main surface (117), i.e. the glass slide (115) from below. On the other hand, it may also be possible that the camera (102) may be movably arranged at the device (100), such that the camera may generate an image of the first main surface (116) of the glass slide, when the first main surface (116) is illuminated by the first light source (203), and the camera may generate an image of the second main surface (117) of the glass slide (115), when the second main surface (117) is illuminated by the second light source (204), or vice versa. The device (100) may further comprise a printed circuit board (213) configured for further processing the generated images and/or for analysis of the generated images. Therefore, the device (100) further comprises an image processing unit arranged e.g. at the printed circuit board (213), which image processing unit is configured for generating a combined image comprising the first image and the second image. The printed circuit board (213) may therefore be electrically connected with the camera (102) and the light sources (203, 204). Further, the device (100) is configured to control the at least two light sources (203, 204) by a pulse width modulation (212), in particular by a pulse width modulation module (212). Hence, the pulse width modulation module (212) may be electrically connected with the camera (102), the two light sources (203 and 204) and also with the printed circuit board (213). For example, the printed circuit board (213) may further comprise a storage or a memory for storing the generated images. Further, the printed circuit board (213) may comprise a data connection for providing the generated images to a database for creating an image database. On the other hand, the memory, the storage, of the printed circuit board (213) may be configured to form or create an image database in the device (100) itself. Moreover, the device (100) may comprise an interface configured to read out data, in particular, to read out image data. The interface may be electrically connected to the printed circuit board (213) or it may be arranged at the printed circuit board (213). In the device (100), the camera (102) creates the image with a resolution in a range of three-times to seven-times resolution, preferably five-times resolution. Hence, a simple conventional camera may be applicable for the image generation in the device (100).

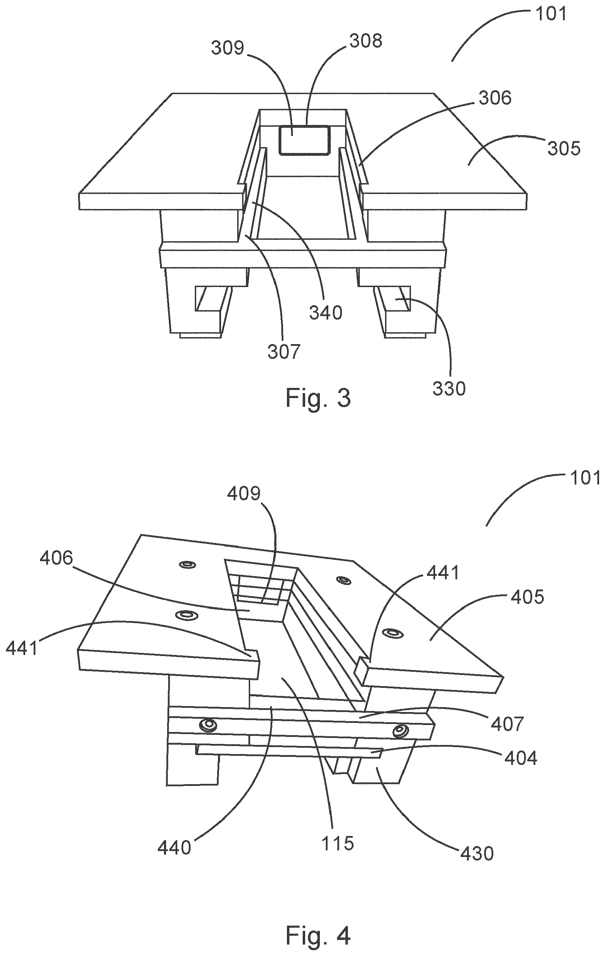

Figure 3 illustrates the releasing unit (101) according to an exemplary embodiment of the invention. The releasing unit (101) comprises a release element (309) and a piston (not visible in Figure 3, the piston can be seen in Figure 5 and 6) configured for releasing the glass slide (115), when the mechanical force is applied, wherein the mechanical force is generated by the piston moving the release element (309). The device (100) further comprises a support unit (307) for holding the glass slide (115) in a predefined position in the receiving unit (110) for generating the image by the camera (102). In particular, the support unit (307) may be formed as a plate or a table onto which the glass slide (115) may be laid. The release element (309) is configured for moving the glass slide (115) out of the device along the support unit (307). Further, the support unit (307) may be formed in such a manner that it extends along the release direction of the glass slide (115) such that the glass slide (115) may be supported along the entire movement by the support unit (307). The device (100) further comprises a plate (305) configured for guiding the release element (309) towards the glass slide (115) when releasing the glass slide (115), wherein a release opening (340) is formed in the plate (305). The release opening (340) is surrounded by the plate (305) on three sides, wherein the glass slide (115) is released by the release element (309) through the release opening (340). Further, the support unit (307) may extend in the release direction beyond the plate (305) and the releasing opening (340). In other words, the support unit (307) extends further than the plate (305), i.e. is longer than the plate (305) in the direction of the release direction. As can be seen in Figure 3, the release opening (340) is formed on one side of the plate (305), for example the front side, and the release element (309) is getting in contact with the glass slide (115) on the opposite side. In particular, the plate (305) is formed above the received glass slide (115), such that the glass slide (115) is spatially moved above the support unit (307) and below the plate (305). The plate (305) may be formed of acrylic material, wherein the material is chosen to be less reflective, such that less reflection on the glass slide (115) may be generated during the illumination by the light sources (203, 304). Further, the plate (305) may guide the release element (309) and preventing it from being inclined into the above direction. Hence, the release element (309) is guided by the plate (305) during it's towards movement into the direction of the glass slide (115). The glass slide (115) may have sharp edges, therefore the receiving unit (110), in particular the support unit (307), may be made of stainless steel for providing a high stability and a long lifetime. This arrangement maximizes the support of the glass slide, the insertion and the release of the glass slide (115).

Furthermore, the release element (309) may be moved through an opening (308) arranged on a backside of the receiving unit (110). The opening (308) for the release element (309) may be formed below the plate (305), wherein the plate (305) may form an upper wall of the opening (308). The opening (308) for the release element (309) may have a shape corresponding to the shape of the release element (309), such that the guiding of the release element (309) may be further improved.

Figure 4 illustrates the releasing unit (101) according to an exemplary embodiment of the present invention. The releasing unit (101) may further comprise a guide rail (330) which may be configured for receiving a light source (204), wherein the light source (204) may be in a form of a LED plate. The material of the guide rail (330) may be duroplastic plastics for being light in weight. The LED plate can be easy pulled out through the guide rail (330), such that the LED plate may be easily cleaned.

Further, the plate (405) for guiding the release element (409) and which plate (405) comprises the release opening (440) may comprise inlet guide elements (441) arranged on each side of the release opening (440). The inlet guide elements (441) may narrow the release opening (440) such that the glass slide (115) may be prevented from being from being tilted during the insertion of the glass slide (115) onto the support (407). Therefore, these inlet guide elements (441) serve for a secure and easy insertion of the glass slide (115) onto the support unit (407).

Figure 5 illustrates the releasing unit (101) from a side view according to an exemplary embodiment of the invention, wherein in this view the plate (305) is removed from the releasing unit (101). As can be seen from Figure 5, when the plate (305) is removed, the release element (509) would not be guided and may be moved inclined. Further, the piston (514) is illustrated in this Figure, wherein the piston (514) may be a turnbuckle configured for adjusting the position of the release element (509). The piston (514) is connected with the motor (550), which moves the piston (514) and the connected release element (509) from a rest position to a release position. In this view of the releasing unit (101) the electrical connection of the LED panel representing one light source (204) is illustrated, wherein the LED panel may be electrically connected by a plug (551) to the printed circuit board (213) and/or to the pulse width modulation module (212).

Figure 6 illustrates the releasing unit (101) from a top view according to an exemplary embodiment of the invention. In particular, the electrical connection (660) of the second light source (204) and the electrical connection (660) of the motor (550) is illustrated. The second light source (204) and the motor (550) may be electrically connected to the printed circuit board (213) of the device (100) and may also be electrically connected to the pulse width modulation module (212) of the device (100).

Figure 7 illustrates a schematically block diagram of a method according to an exemplary embodiment of the invention. The device (100) may be able to perform the method for generating an image of a biological sample on a glass slide (115) and for generating an inventory in an image database. The method may comprise the steps of receiving the biological sample on the glass slide (115) by the receiving unit (110) of the device (100). This step is indicated in Figure 7 using block S1, wherein step S1 may be the first step carried out by the method. Further, the method may comprise generating an image of the biological sample on the glass slide (115) by a camera (102 displayed in Figure 2) of the device (100), while being received by the receiving unit (110). This step is indicated in Figure 7 using block S2, wherein this step S2 may be the second step carried out by the method. The method may further comprise the step S3 of automatically releasing the glass slide (115) by a releasing unit (101) of the device (100) after the generating of the image by the camera (102). This step may be a third step carried out by the method. The generation of the image of the biological sample on the glass slide (115) comprises an overall image of the glass slide (115) and the biological sample on the glass slide (115). The release comprises the application of a mechanical force onto the glass slide (115) received by the receiving unit (110) for releasing the glass slide (115) from the receiving unit (110).

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. Any reference signs in the claims should not be construed as limiting the scope.

### List of reference signs:

- 100: device for generating an image of a biological sample on a glass slide
- 101: releasing unit
- 102: camera
- 110: receiving unit
- 111, 211: sidewall
- 115: glass slide
- 116: first main surface of the glass slide
- 117: second main surface of the glass slide
- 118: scattering unit
- 203: first light source
- 204, 404: second light source
- 212: pulse width modulation
- 213: printed circuit board
- 305, 405: plate
- 306: receiving opening
- 307, 407: support unit
- 308: opening for the release element
- 309, 409, 509: release element
- 330, 430, 530: guide rail
- 340, 440: release opening
- 441: inlet guide element
- 514: piston
- 550: motor
- 551: light source connector
- 660: electrical connection

## Claims

1. Device for generating an image of a biological sample on a glass slide for generating an inventory in an image database, the device comprising
a receiving unit (110) configured for receiving the biological sample on the glass slide (115),
a camera (102) configured for generating an image of the biological sample while being received by the receiving unit (110),
a releasing unit (101) configured for automatically releasing the glass slide (115) from the receiving unit (110) after generating the image by the camera,
wherein the camera (102) is configured to generate the image such that the image of the biological sample on the glass slide comprises an overall image of the glass slide and the biological sample on the glass slide,
wherein the releasing unit (101) is configured for applying a mechanical force onto the glass slide (115) received by the receiving unit (110) for releasing the glass slide from the receiving unit (110).

2. Device according to claim 1, wherein the releasing unit comprises
a release element (309) and a piston (514) configured for releasing the glass slide (115), when the mechanical force is applied, wherein the mechanical force is generated by the piston moving the release element (309).

3. Device according to claim 2,
wherein the piston is a turnbuckle configured for adjusting the position of the release element (309).

4. Device according to any of the preceding claims, wherein the device further comprises
a receiving opening (306) configured for receiving the glass slide (115) in the receiving unit (110), and
a support unit (307) for holding the glass slide in a predefined position in the receiving unit for generating the image by the camera (102).

5. Device according to claim 4, wherein the release element (309) is configured for moving the glass slide out of the device along the support unit (307).

6. Device according to any of the claims 2 to 5, wherein the device further comprises
a plate (305) configured for guiding the release element (309) towards the glass slide (115) when releasing the glass slide,
wherein a release opening formed in the plate is surrounded by the plate on three sides,
wherein the glass slide is released by the release element through the release opening

7. Device according to any of the preceding claims, wherein the device further comprises
at least a first light source (203) for illuminating the glass slide, and
a second light source (204) for illuminating the glass slide,
wherein the first light source (203) is arranged and configured to illuminate a first main surface of the received glass slide (115),
wherein the second light source (204) is arranged and configured to illuminate a second main surface of the received glass slide (115).

8. Device according to claim 7, wherein the first light source and/or the second light source is a LED.

9. Device according to claim 7 or 8, wherein the camera (102) is configured for generating a first image from the glass slide when illuminated by the first light source (203) and a second image from the glass slide when illuminated by the second light source (204).

10. Device according to claim 9, wherein the device further comprises an image processing unit configured for generating a combined image comprising the first image and the second image.

11. Device according to any of the preceding claims 7 to 10, wherein the device is configured to control the at least two light sources by a pulse width modulation.

12. Device according to any of the preceding claims wherein the camera (102) creates the image with a resolution in a range of three-times to seven-times resolution, preferably a five-times resolution.

13. Method for generating an image of a biological sample on a glass slide and generating an inventory in an image database, the method comprising the steps of
receiving the biological sample on the glass slide (115) by a receiving unit (110) of a device (S1),
generating an image of the biological sample on the glass slide by a camera (102) of the device, while being received by the receiving unit (110) (S2),
automatically releasing the glass slide by a releasing unit (101) of the device after the generating of the image by the camera (S3),
wherein the generating of the image of the biological sample on the glass slide comprises an overall image of the glass slide and the biological sample on the glass slide,
wherein the releasing comprises applying a mechanical force onto the glass slide received by the receiving unit (110) for releasing the glass slide from the receiving unit (110).

14. Method according to clam 13, wherein the method further comprises the steps of
illuminating a first main surface of the received glass slide by a first light source (203) of the device,
illuminating a second main surface of the received glass slide by a second light source (204) of the device.
generating a first image of the glass slide when illuminated by the first light source, and
generating a second image of the glass slide when illuminated by the second light source.

15. Method according to claim 14, further comprising the step of
generating a combined image comprising the first image and the second image.

16. Method according to any of the previous claims 13 to 15, further comprising the step of
using the generated image for generating the inventory of the image database.
